# FASCICULE DE BREVET EUROPEEN

(11) **EP 0 581 647 B1**
(45) Date de publication et mention de la délivrance du brevet: **18.03.1998**
(21) Numéro de dépôt: 93401891.2
(22) Date de dépôt: 21.07.1993
(51) Int. Cl.: C22B 9/18, C21C 7/076

(54) **Procédé d'élaboration d'alliages magnétiques doux à très haute perméabilité et alliages en résultant**
Verfahren zur Herstellung von weich-magnetischen Legierungen hoher permeabilität und Legierungen
Process for preparing of soft magnetic alloys with high permeability and alloys

(30) Priorité: 30.07.1992 FR 9209462
(43) Date de publication de la demande: 02.02.1994
(73) Titulaire: IMPHY S.A., F-92072 Puteaux (FR)
(72) Inventeur: Couderchon, Georges, F-58160 Sauvigny les Bois (FR); Coutu, Lucien, F-58160 Sauvigny les Bois (FR); Faral, Michel, F-58000 Nevers (FR)
(74) Mandataire: Polus, Camille

(56) Documents cités:
- DE-A- 4 105 507
- DE-B- 1 091 343
- US-A- 3 857 702
- US-A- 4 450 007
- MEMOIRES SCIENTIFIQUES DE LA REVUE DE METALLURGIE vol. 75, no. 2 , Février 1978 , PARIS FR pages 61 - 80 J.F.WADIER ET AL. 'étude des échanges métal-laitier au cours de le refusion sous laitier d'alliages fer-nickel'

## Description

La présente invention concerne un procédé d'élaboration d'alliages magnétiques doux à très haute perméabilité dans lequel on élabore par fusion un lingot d'alliage contenant plus de 70% de nickel ou plus de 45% de cobalt, le métal ayant été soumis ou non à une étape de métallurgie secondaire, on refond le lingot sous un laitier électroconducteur, les lingots refondus étant transformés en bandes après laminage à chaud puis laminage à froid, les bandes étant ensuite soumises à un traitement pour le développement des caractéristiques magnétiques. L'invention concerne aussi les alliages résultant de ce procédé.

Les propriétés magnétiques des alliages magnétiques doux comme par exemple la perméabilité, le champ coercitif, les pertes, dépendent beaucoup du degré de propreté inclusionnaire des alliages. Une course à la pureté se poursuit depuis toujours par tous les moyens techniques disponibles. On peut citer pour ce but, par exemple le choix des matières de départ, l'élaboration de l'alliage sous vide, le traitement des alliages liquides par les laitiers, etc.

Le procédé de refusion sous laitier électroconducteur (ESR) est connu et utilisé industriellement, particulièrement dans le domaine des aciers spéciaux. Toutefois le procédé est très peu ou pas utilisé dans le cas des alliages magnétiques extra-doux, car il est considéré que l'emploi d'un laitier introduit des éléments indésirables dans l'alliage tel que aluminium, calcium, etc, qui compromettent l'obtention de bonne qualité magnétique sur les bandes d'alliages magnétiques doux. On préfère donc généralement utiliser une élaboration directe sous vide en partant de matières très pures.

La densité inclusionnaire joue un rôle très Important sur le développement ultérieur des propriétés magnétiques des produits réalisés à partir de la bande :
- d'une part, les inclusions ralentissent le mouvement des parois de BLOCH au cours des processus d'aimantation et amènent ainsi un accroissement du champ coercitif et une baisse des perméabilités,
- d'autre part, les inclusions gênent le grossissement du grain et ainsi, conduisent à une qualité magnétique moindre sur les produits finis.

La refusion sous laitier électroconducteur d'un alliage élaboré par exemple sous vide permet d'abaisser très sensiblement sa teneur en impuretés, et sa densité d'inclusions, et ainsi, après transformation à chaud, à froid et traitement thermique, d'obtenir des alliages plus purs qui recristallisent plus vite et qui donnent des propriétés magnétiques améliorées.

Un article de J.F. Wadier et al. paru dans Mémoires Scientifiques de la Revue de Métallurgie, Février 1978, pages 61-80 fait connaître un procédé d'élaboration d'alliages magnétiques tels que le MUMETAL par refusion sous laitier électroconducteur (ESR). Cependant, le procédé ESR mis en oeuvre utilise des laitiers de composition quaternaire renfermant de l'ordre de 5 % d'alumine AL₂O₃. L'alliage obtenu par refusion sous laitier renferme au moins 0,0075 % d'aluminium. De ce fait, les caractéristiques magnétiques de l'alliage et en particulier la perméabilité maximale ne peuvent être garanties à des niveaux très élevés.

L'invention a pour but l'amélioration de la qualité chimique et métallurgique d'un alliage magnétique doux à très haute perméabilité, en particulier d'un alliage à base nickel, contenant dans sa composition plus de 70 % de cet élément ou à base cobalt, contenant plus de 45 % de cet élément.

Elle a pour objet un procédé dans lequel on refond l'alliage sous un laitier dont la composition pondérale est la suivante :
Flurorure de calcium CaF₂ (50-75) %
Chaux CaO (20-30) %
Silice SiO₂ (5-15) %
Alumine Al₂O₃ < 3 %.

De préférence, le laitier a la composition pondérale suivante :
CaF₂ (57-67) %
CaO (22-28) %
SiO₂ (9-15) %.

Les autres caractéristiques de l'invention sont :
- l'alliage avant refusion comprend en sa composition pondérale,
   nickel (70-85) %
   molybdène (2-7) %
   manganèse (0,05-1) %
   silicium (0,05-0,5) %
   aluminium ≤ (0,015) %
   carbone < (0,02) %,
le reste étant du fer et des impuretés amenées involontairement par les matériaux de base ou par le cycle de fabrication.

Dans une autre application de l'invention, l'alliage avant refusion comprend en sa composition pondérale :
cobalt (45-52) %
vanadium (0-2,5) %
fer complément,
et les impuretés amenées par les matériaux de base et le cycle de fabrication.

L'invention concerne également un alliage magnétique doux à très haute perméabilité contenant plus de 70 % de nickel élaboré par le procédé selon l'invention caractérisé en sa composition pondérale (après refusion):
nickel (79 à 81)%
molybdène (4,5-6) %
manganèse (0,3-0,5) %
silicium (0,05-0,3) %
aluminium ≤ (0,003) %
carbone ≤ (0,02) %,
le reste étant constitué par du fer et des impuretés résultant de l'élaboration.

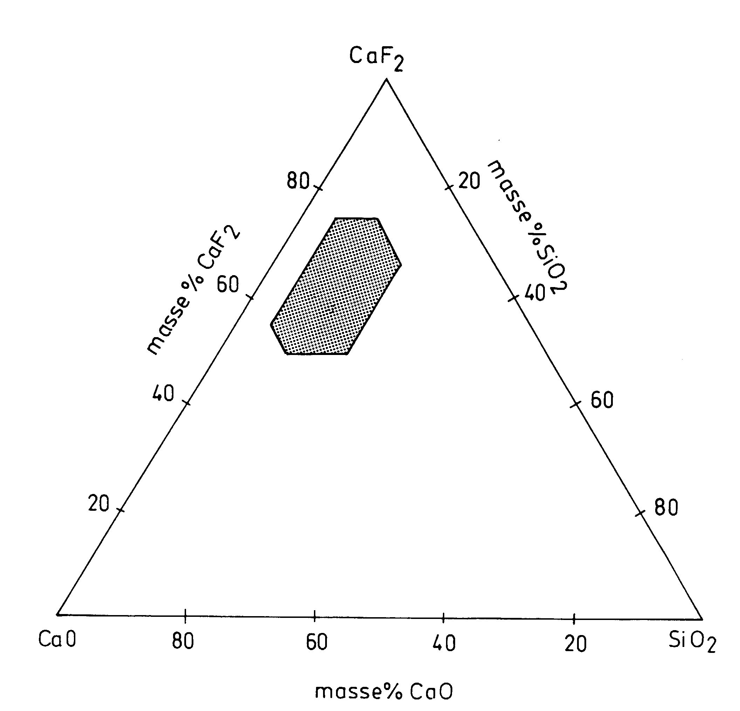

La description qui suit et la figure unique feront mieux comprendre l'invention.

La figure unique présente un diagramme ternaire définissant la composition générale du laitier électroconducteur selon l'invention.

L'invention est particulièrement adaptée à l'élaboration des alliages magnétiques à très haute perméabilité et à champ coercitif faible, du type Fe Ni Mo (15-80-5) dont on refond des lingots sous laitier électroconducteur (ESR). Les lingots ainsi obtenus sont ensuite transformés en bandes minces après laminage à chaud puis laminage à froid. Les bandes minces sont ensuite traitées thermiquement sous des températures supérieures à 1000°C pour développer les caractéristiques magnétiques.

Les alliages de base, en première fusion, dont la composition est la suivante :
nickel (70-85) %
molybdène (2-7) %
manganèse (0,05-1) %
silicium (0,05-0,5) %
le reste étant du fer, sont fondus par toute technique classique polluant le moins possible le métal liquide tel que par exemple, four à arc associé ou non à une étape de métallurgie secondaire, creuset chauffé par induction, etc.

Les éléments principaux de l'alliage sont ajustés à leur valeur nominale et les éléments indésirables maintenus à un bas niveau. L'alliage liquide est coulé en lingot de taille adaptée à la refusion sous laitier électroconducteur ultérieure.

Dans une deuxième opération selon l'invention, les lingots sont refondus dans un four à électrodes consommables sous un laitier dont la composition pondérale est la suivante :
CaF₂ (50-75)%
CaO (20-30)%
SiO₂ (5-15)%
Al₂O₃ < 3%

Le laitier électroconducteur interagit avec l'alliage fondu et détermine par sa composition et ses caractéristiques intrinsèques les propriétés de l'alliage élaboré et les propriétés magnétiques des produits réalisés avec les bandes obtenues après laminage de l'alliage.

Il est avantageux d'utiliser dans le diagramme ternaire CaO, SiO₂, CaF₂ la zone à bas points de fusion et à forte teneur en CaF₂. Le CaF₂ outre son rôle de fondant qui favorise la dissolution de CaO et SiO₂ et fixe la température de refusion, contribue à abaisser la teneur en soufre. En dessous de 50% CaF₂ cette opération est plus difficile et au dessus de 75% CaF₂ le contrôle de la composition du laitier devient très délicat.

La CaO est introduite dans le laitier pour son pouvoir désulfurant, ce qui nécessite une teneur minimale de 20%. Au dessus de 30% en poids la viscosité du laitier s'élève trop rapidement avec la température.

En dessous de 5% en SiO₂, l'alliage élaboré comporte de petites inclusions qui réduisent les propriétés magnétiques des produits obtenus.

En dessus de 15% en SiO₂ l'alliage devient difficileà transformer à chaud.

La figure présente un diagramme ternaire qui selon l'invention définit le domaine de composition préférentiel qui assure les qualités de l'alliage et des produits obtenus.

Dans le domaine préférentiel de composition : CaF₂ compris entre 57 et 67%, CaO compris entre 22 et 28%, SiO₂ compris entre 9 et 15%, correspondant au laitier utilisé pour les exemples décrits par la suite, un alliage dont la composition est la suivantes : nickel 80%, molybdène 5%, manganèse 0,4%, silicium 0,2%, aluminium 0,003%, carbone 0,015% élaboré par fusion sous vide, comporte une densité de 50 inclusions par mm² de taille supérieure à un micromètre. Après refusion sous laitier électroconducteur la densité en inclusions de l'alliage est inférieure à 10 inclusions par mm². De plus une refusion sous laitier selon l'invention permet d'améliorer la forgeabilité à chaud des lingots, de réduire en nombre les macrodéfauts sur les produits finis.

Le laitier selon l'invention peut contenir en outre jusqu'a < 3% d'Al₂O₃ sans nuire à la qualité de l'alliage. La présence d'Al₂O₃ dans le laitier à une concentration inférieure à 3% génère une teneur en aluminium du lingot refondu inférieure à 50ppm en poids.

Cette faible concentration en aluminium apporté par Al₂O₃ permet de préserver de bonnes caractéristiques magnétiques sur les tôles de l'alliage après traitements thermiques.

Le laitier est également adapté à l'élaboration d'alliages magnétiques doux dont la composition pondérale est la suivante : cobalt de 45 à 52%, vanadium 0 à 2,5%, Fer complément sans l'apport d'éléments électropositifs oomme l'aluminium nocif pour les propriétés magnétiques des produits finaux.

Les lingots issus de la refusion sous laitier sont transformés à chaud par des techniques classiques jusqu'à obtenir des bandes d'épaisseur comprise entre 3 et 7 mm. Les bandes laminées à chaud après décapage sont laminées à froid jusqu'à des épaisseurs allant de 0,01 à 3 mm. Dans cette opération de laminage le taux d'écrouissage du dernier laminage à froid est généralement inférieur à 80%. Les bandes obtenues par laminage sont ensuite mises sous forme de produit tel que circuit magnétique et traitées généralement à des températures supérieures à 1000°C sous hydrogène pur et sec pour développer les caractéristiques magnétiques.

Trois exemples issus de fabrication industrielle permettent d'illustrer les résultats obtenus.

### Exemple 1 :

La matière première de bonne qualité et correspondant à la composition décrite auparavant est fondue dans un four à induction sous vide profond puis désoxydée par le carbone. Le métal liquide est coulé en lingots de 3 tonnes. Ces lingots sont refondus avec le laitier électroconducteur selon l'invention. La composition de l'alliage après refusion ESR est la suivante ; nickel 80,25%, Mo 4,8%, Mn 0,4%, Si 0,23%, Al 0,003%, C 0,012%, le fer étant le reste.

Après transformation à chaud puis à froid en bandes de 1,5mm d'épaisseur, puis recuit pendant 6 heures à 1200°C sous hydrogène pur et sec suivi d'un refroidissement à environ 200°C/h, les caractéristiques magnétiques obtenues sont les suivantes : champ coercitif H_{c} = 0,003 Oe (0,25 A.m⁻¹), perméabilité maximale en excitation continue µₘₐₓ - 597.000.

Les bandes ainsi produites avec les caractéristiques nettement améliorées peuvent être utilisées pour la fabrication de produits tels que des relais électromagnétiques ultra sensibles.

### Exemple 2 :

L'alliage décrit dans l'exemple 1 a été laminé en bandes de 0,34mm d'épaisseur, puis traité à 1200°C pendant 6 heures sous hydrogène et refroidi jusqu'à la température ambiante à environ 200° C/h. Les propriétés intéressantes pour son emploi sont les suivantes : champ coercitif H_{c} = 4 mOe (0,33A.m⁻¹), la perméabilité relative d'impédance en excitation sinusoïdale de 60 Hz dans un champ magnétique de valeur crête de 5 mOe est égal µ_{z}= 75500.

### Exemple 3 :

Les lingots par refusion ESR sont élaborés dans un four à induction sous vide. Ces lingots sont ensuite refondus sous laitier électroconducteur comme il a été décrit précédemment. La composition chimique des lingots après refusion est la suivante : Ni-80,3, Mo=4,75%, Mn=0,37%, Si 0,21%, Al=0,003%, C=0,022%, le reste étant du fer. Ces lingots sont transformés à chaud et à froid par des moyens classiques. Toutefois le dernier laminage qui conduit à une bande de 0,07 mm est effectué avec un taux d'écrouissage d'environ 60%. Les bandes extra minces ainsi obtenues sont refendues en lacets de 20 mm de large avec lesquels on fabrique des tores en bandes enroulées dont les inter-spires sont isolées par de la magnésie afin d'éviter le collage au cours des traitements thermiques. Ces tores d'un diamètre intérieur de 20 mm et d'un diamètre extérieur de 30 mm sont destinés à la fabrication de disjoncteurs différentiels très sensibles, et sont recuits à des températures comprises entre 1000 et 1200°C sous hydrogène pur et sec. Ils subissent ensuite un dernier traitement thermique d'une durée d'une heure à environ 500°C ajusté à chaque coulée pour régler l'anisotropie magnéto-cristalline.

Pour l'alliage décrit dans l'exemple 3 le traitement thermique est effectué à 1200°C pendant une durée de 4 heures suivi d'un recuit vers 500°C. Les caractéristiques magnétiques d'usage en excitation alternative à 50Hz sont, pour la perméabilité relative d'impédance à 5mOe crête, égales à 290.000, et pour la perméabilité relative d'impédance maximale égales à 390.000.

Le procédé de refusion sous laitier selon l'invention combiné avec le procédé de transformation des bandes d'alliage magnétique au nickel permet :
- d'améliorer la propreté inclusionnaire et ainsi d'une façon générale les propriétés magnétiques de ces alliages doux, soit en conduisant à des valeurs de perméabilité plus élevées avec des traitements traditionnels, soit en autorisant des traitements à température plus basse,
- de réduire en nombre les inclusions et de ce fait d'améliorer la corrosion par piqûre.

La refusion sous laitier améliore la forgeabilité très critique de ces alliages, permet d'abaisser les rebuts dans les opérations de transformation à chaud, de faire disparaître les défauts internes qui apparaissent sur les bandes minces lors des traitements thermique finaux.

## Revendications

1. Procédé d'élaboration d'un alliage magnétique doux à très haute perméabilité dans lequel on élabore par fusion un lingot contenant en sa composition plus de 70 % de nickel ou plus de 45 % de cobalt, le métal ayant été soumis ou non à une étape de métallurgie secondaire, on refond le lingot sous un laitier électroconducteur, les lingots refondus étant transformés en bandes après laminage à chaud puis laminage à froid, les bandes étant ensuite soumises à un traitement pour le développement des caractéristiques magnétiques, caractérisé en ce qu'on refond l'alliage sous un laitier dont la composition pondérale est la suivante :
CaF₂ (50-75) %
CaO (20-30) %
SiO₂ (5-15) %
Al₂O₃ < 3 %.

2. Procédé selon la revendication 1, caractérisé en ce que le laitier a la composition pondérale suivante :
CaF₂ (57-67)%
CaO (22-28) %
SiO₂ (9-15) %.

3. Procédé selon la revendication 1, caractérisé en ce que l'alliage avant refusion comprend en sa composition pondérale : nickel de 70 à 85 % ; molybdène de 2 à 7 %; manganèse de 0,05 à 1 %; silicium de 0,05 à 0,5 % ; aluminium ≤ 0,015%; carbone ≤ 0,02 %, le reste étant du fer et des impuretés amenées involontairement par les matériaux de base ou le cycle de fabrication.

4. Procédé selon la revendication 1, caractérisé en ce que l'alliage avant refusion comprend en sa composition pondérale : cobalt de 45 à 52 %, vanadium de 0 à 2,5 %, fer complément.

5. Alliage magnétique doux à très haute perméabilité contenant plus de 70 % de nickel élaboré par le procédé selon les revendication 1 à 5, caractérisé en ce qu'il renferme en poids : de 79 à 81 % de nickel, de 4,5 à 6 % de molybdène, de 0,3 à 0,5 % de manganèse, de 0,05 à 0,5 % de silicium, moins de 0,02 % de carbone, moins de 0,003 % d'aluminium, le reste étant constitué par du fer et des impuretés résultant de l'élaboration.

## Patentansprüche

1. Verfahren zur Herstellung einer weichmagnetischen Legierung sehr hoher Permeabilität, in dem man durch Schmelzen einen Block herstellt, der in seiner Zusammensetzung mehr als 70% Nickel oder mehr als 45% Kobalt enthält, wobei das Metall einer metallurgischen Nebenbehandlung unterzogen wurde oder nicht, man den Block unter einer Elektroschlacke umschmilzt, wobei die umgeschmolzenen Blöcke nach Warmwalzen und darauf folgendem Kaltwalzen in Bänder umgeformt werden, die anschließend einer Behandlung zur Entwicklung der magnetischen Eigenschaften unterzogen werden, dadurch gekennzeichnet, daß man die Legierung unter einer Schlacke mit der folgenden Gewichtszusammensetzung umschmilzt:
CaF₂ (50-70) %
CaO (20-30) %
SiO₂ (5-15) %
Al₂O₃ < 3 %.

2. Verfahren nach Anspruch 1, dadurch gekennzeichnet, daß die Schlacke die folgende Gewichtszusammensetzung hat:
CaF₂ (57-67) %
CaO (22-28) %
SiO₂ (9-15) %.

3. Verfahren nach Anspruch 1, dadurch gekennzeichnet, daß die Legierung vor dem Umschmelzen die folgende Gewichtszusammensetzung hat: Nickel 70 bis 85 %, Molybdän 2 bis 7 %, Mangan 0,05 bis 1 %, Silicium 0,05 bis 0,5 %, Aluminium ≤ 0,015 %, Kohlenstoff ≤ 0,02 %, wobei der Rest Eisen und die ungewollt durch die Grundstoffe oder den Herstellungszyklus eingeführten Verunreinigungen ist.

4. Verfahren nach Anspruch 1, dadurch gekennzeichnet, daß die Legierung vor dem Umschmelzen die folgende Gewichtszusammensetzung hat: Kobalt 45 bis 52 %, Vanadium 0 bis 2,5%, der Rest Eisen.

5. Weichmagnetische Legierung sehr hoher Permeabilität, die mehr als 70 % Nickel enthält und in dem Verfahren nach den Ansprüchen 1 bis 5 hergestellt ist, dadurch gekennzeichnet, daß sie, bezogen auf das Gewicht, folgendes enthält: 79 bis 81 % Nickel, 4,5 bis 6 % Molybdän, 0,3 bis 0,5 % Mangan, 0,05 bis 0,5 % Silicium, weniger als 0,02 % Kohlenstoff, weniger als 0,003 % Aluminium, wobei der Rest Eisen und die sich aus der Herstellung ergebenden Verunreinigungen ist.

## Claims

1. Process for refining a soft magnetic alloy of very high permeability in which an ingot containing in its composition more than 70% of nickel or more than 45% of cobalt is refined by melting, the metal having been subjected or not to a secondary metallurgical stage, the ingot is re-melted under an electro-conductive slag, the re-melted ingots being transformed into strips after hot lamination then cold lamination, the strips being subsequently subjected to a treatment for the development of the magnetic characteristics, characterised in that the alloy is re-melted under a slag of which the composition by weight is the following:
CaF₂ (50-75)%
CaO (20-30)%
SiO₂ (5-15)%
Al₂O₃ <3%.

2. Process according to claim 1, characterised in that the slag has the following principal composition by weight:
CaF₂ (57-67)%
CaO(22-28)%
SiO₂(9-15)%

3. Process according to claim 1, characterised in that the alloy, before re-melting, has in its composition by weight: nickel from 70 to 85%; Molybdenum from 2 to 7%; manganese from 0.05 to 1%; silicon from 0.05 to 0.5%; aluminium ≤ 0.015%; carbon ≤ 0.02%, the balance being iron and impurities incorporated inadvertently from the starting materials or the fabrication cycle.

4. Process according to claim 1, characterised in that the alloy, before re-melting, comprises in its composition by weight : cobalt from 45 to 52%, vanadium from 0 to 2.5%, balance iron.

5. Soft magnetic alloy of very high permeability containing more than 70% of nickel refined by the process according to claim 1 to 5, characterised in that it comprises by weight: from 79 to 81% of nickel, from 4.5 to 6% of molybdenum, from 0.3 to 0.5% of manganese, from 0.05 to 0.5% of silicon, less than 0.02% of carbon, less than 0.003% of aluminium, the rest being made up of iron and impurities resulting from the refinement.
